(19) Europäisches Patentamt
European Patent Office
Office européen des brevets

(11) EP 4 281 494 B1

(12) **EUROPEAN PATENT SPECIFICATION**

(45) Date of publication and mention of the grant of the patent:
**29.05.2024 Bulletin 2024/22**

(21) Application number: **23703584.5**

(22) Date of filing: **08.02.2023**

(51) International Patent Classification (IPC):
***C08J 5/04*** *(2006.01)* ***B32B 27/08*** *(2006.01)*
***B32B 27/12*** *(2006.01)* ***C08J 5/24*** *(2006.01)*

(52) Cooperative Patent Classification (CPC):
**C08J 5/043; C08J 5/244;** C08J 2377/02

(86) International application number:
**PCT/EP2023/053122**

(87) International publication number:
**WO 2023/152185 (17.08.2023 Gazette 2023/33)**

(54) **FIBER-REINFORCED THERMOPLASTIC COMPOSITE**

FASERVERSTÄRKTES THERMOPLASTISCHES VERBUNDMATERIAL

COMPOSITE THERMOPLASTIQUE RENFORCÉ DE FIBRES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **09.02.2022 EP 22156005**

(43) Date of publication of application:
**29.11.2023 Bulletin 2023/48**

(73) Proprietor: **Domo Engineering Plastics GmbH**
**14727 Premnitz (DE)**

(72) Inventors:
- **BRADLEY, Gerard**
  **69126 Brindas (FR)**
- **LEHMANN, Stephan**
  **04420 Markranstädt (DE)**

(74) Representative: **Gevers Patents**
**De Kleetlaan 7A**
**1831 Diegem (BE)**

(56) References cited:
**US-A1- 2016 289 448**
**US-A1- 2018 043 580**
**US-A1- 2019 071 549**
**US-A1- 2019 240 934**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 281 494 B1

## Description

## BACKGROUND

Composite materials can include fibers dispersed in resin/polymeric matrix. Such composite materials are useful in various industries, such as, for example, in the consumer electronics, ballistics, aerospace, and transportation industries. A UD composite is a composite having fibers that extend in substantially one direction. UD composites, having anisotropic properties, can be used to make articles of manufacture having properties that vary in one or more directions or dimensions.

An example of UD composite is a UD tape or prepreg, which may be characterized as a strip or band of continuous UD fibers (e.g., glass fibers, carbon fibers, and/or the like) impregnated with a thermoplastic or thermosetting polymer resin. Such UD tapes can have a width of from 1 to 15 cm, perhaps wider (for instance 50 cm or even 1 m), and a thickness of less than 1 mm. Such UD tapes may be provided on a spool or reel.

In theory, all fibers in a UD composite should be uniform, parallel, and continuous; however, in practice, such properties are difficult to achieve. For example, commonly available UD tapes may have fibrous regions or layers that include non-uniform arrangements of fibers, air pockets or voids, broken fibers, and/or the like. There have been numerous attempts to address these problems.

Some attempts to solve these problems include the use of fiber spreading devices and/or the use of impregnation devices. Typical impregnation processes include the use of baths of melted polymer through which a fiber layer may be moved. In such a process, the melted polymer may be pressed into the fiber layer using a roller. Another process impregnates a fiber layer by pressing polymer films on opposing sides of the layer into the layer. Each of these processes are similar in that they involve pressing a polymeric resin material into a fiber layer to achieve impregnation of the fiber layer.

While such fiber spreading and impregnation devices and processes may be used to prepare a UD tape, such a UD tape still suffers from non-uniform fiber arrangement and air pockets or voids in the matrix material. For example, some commercially available UD composites possess fibrous regions having non-uniform fiber arrangements, and thus non-uniform densities, as well as voids and air pockets in the polymeric matrix.

Therefore, there is still the need to provide a UD composite which overcomes the above-mentioned disadvantages of the prior art.

There is also a need to provide a UD thermoplastic composite with a good impregnation of the thermoplastic matrix.

Indeed, the thermoplastic composites present some advantages compared to thermosetting composites (usually used). Thermoplastic composites are recyclable, they have good mechanical properties and their post-processing is easier.

But whereas the impregnation of thermosetting matrices is easier due to their low molecular weight, it's not the case with thermoplastic matrices.

So, there is a need for thermoplastic composites, with an improved impregnation of the thermoplastic matrix.

## SUMMARY OF THE INVENTION

The present invention generally concerns unidirectional (UD) fiber-reinforced thermoplastic composites and methods for making the same.

The inventors of the present application surprisingly found that the above-mentioned object can be achieved by providing a fiber-reinforced thermoplastic composite comprising:

a matrix material including a thermoplastic material; and
a plurality of continuous fibers dispersed in the matrix material

wherein each of the plurality of continuous fibers is substantially aligned with the length of the fiber-reinforced composite
wherein the matrix material is a linear or branched polyamide having:

- a relative viscosity (measured in $H_2SO_4$ 96% at 25°C, 1g of polyamide for 100 ml $H_2SO_4$, according to the norm DIN EN ISO 307:2019-11) of at least 1.7 and of at most 2.3; and
- a concentration of amine end groups (AEG) and a concentration of carboxylic end groups (CEG)° such that the absolute difference |AEG-CEG| is at least of 50 meq/kg

The invention also provides a method of producing the fiber-reinforced thermoplastic composite, and an article comprising the fiber-reinforced thermoplastic composite.

## BRIEF DESCRIPTION OF THE DRAWINGS

FIGs 1-3 are longitudinal images of tapes according respectively to Comp Ex.2, Ex.1 and Ex.3.
FIGs 4-6 show graphs (number of pixels in function of gray scale number) corresponding to longitudinal images of tapes according respectively to Comp Ex.2, Ex.1 and Ex.3.

## DETAILED DESCRIPTION

Before the issues of the invention are described in detail, the following should be considered:
As used herein, the singular forms "a", "an", and "the" include both singular and plural referents unless the context clearly dictates otherwise. By way of example, "a particle" means one particle or more than one particle.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

The term "void" refers to a gas pocket within a fiber-reinforced composite. The void content of a composite may be determined by taking a cross-sectional image of the composite (e.g., using scanning electron microscopy, confocal microscopy, optical imaging, or other imaging techniques) and calculating in the cross section the differences in the color of the fibers, the matrix and the gas pockets, via gray scale analysis or differences in colors due to differences in density.

As mentioned above, the invention refers to a fiber-reinforced thermoplastic composite comprising:

a matrix material including a thermoplastic material; and
a plurality of continuous fibers dispersed in the matrix material

wherein each of the plurality of continuous fibers is substantially aligned with the length of the fiber-reinforced composite
wherein the matrix material is a linear or branched polyamide having:

- a relative viscosity (measured in $H_2SO_4$ 96% at 25°C, 1g of polyamide for 100 ml $H_2SO_4$, according to the norm DIN EN ISO 307:2019-11) of at least 1.7 and of at most 2.3; and
- a concentration of amine end groups (AEG) and a concentration of carboxylic end groups (CEG) such that the absolute difference |AEG-CEG| is at least of 50 meq/kg

AEG and CEG are determined by potentiometric titration in trifluoroethanol (TFE), according to a protocol detailed below.

## MATRIX MATERIAL

The matrix material is a linear or branched polyamide.

The polyamides can be chosen from the group consisting of polyamides obtained by polycondensation of at least one linear aliphatic dicarboxylic acid with an aliphatic or cyclic diamine or between at least one aromatic dicarboxylic acid and an aliphatic or aromatic diamine, polyamides obtained by polycondensation of at least one amino acid or lactam with itself, or their blend and (co)polyamides. Semicrystalline polyamides are particularly preferred.

In a more preferred embodiment, the polyamide is selected from the group consisting of aliphatic, cycloaliphatic or semi aromatic polyamide and mixture thereof.

In an even more preferred embodiment of the invention, the polyamide is selected from the group consisting of PA 6, PA 10, PA 11, PA 12, PA 6.6, PA 6.9, PA 4.6, PA 4.10, PA 5.10, PA 6.10, PA 6.12, PA 6.14, PA 10.10, PA 10.12, PA 10.14, PA 10.18, PA 12.12, PA 6.18, PA 6.36, PA 9.T, PA 6.T, PA 6.I, PA 10.T, PA PACM.6 (PACM= 4,4-Diaminodi-cyclohexylmethane), PA MPMD.10 (MPMD = methyl pentamethylenediamine), MPMD.6/MPMD.T, PA IPD.6 (IPD=isophoronediamine), blends thereof and copolymers based on these polyamides.

Most preferably the polyamide is selected from the group consisting of PA 6.6, PA 6, PA 6.10, PA 6.12, PA 11 and PA 12 and copolyamides PA 6.6/6, PA 6/6.6, PA 6/6.T, PA 6.T/6, PA 6.10/6.T, PA 6.6/6.T, PA 6.T/6.6, PA 6.T/6.I, PA 6.T/6.I/6.6, PA 6.T/MPMD.T and blends thereof, such as PA 6.6/PA 6, PA 6.10/PA 6.6 and PA 6.6/6.T/PA 6, PA 6.6, PA 6, PA 6.10, PA 6.12, PA 11 and PA 12, copolyamides, such as PA 66/6 and blends of polyamides, such as PA 66/PA 6 are suitable as well.

The polyamide is preferably PA 6.

The matrix material is preferably a branched polyamide.

According to one preferred embodiment, the branched polyamide is a polyamide capable of being by a process for the polycondensation of a mixture of monomers comprising:

a) monomers of the following general formula (I):

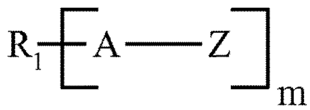 (I)

b) monomers of the following general formulae (IIa) and (IIb):

$X-R_2-Y$ (IIa) or 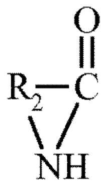 (IIb)

and

c) monomers of the following general formula (III):

$Z-R_3-Z$ (III)

in which:

$R_1$ is a linear or cyclic, aromatic or aliphatic, hydrocarbon radical which comprises at least two carbon atoms and which can comprise heteroatoms,
A is a covalent bond or an aliphatic hydrocarbon radical comprising 1 to 6 carbon atoms,
Z represents a primary amine radical or a carboxyl group,
$R_2$ and $R_3$, which are identical or different, are each substituted or unsubstituted aliphatic, cycloaliphatic or aromatic hydrocarbon radicals which comprise from 2 to 20 carbon atoms and which can comprise heteroatoms,
X represents a carboxyl radical or a primary amine radical; Y is a primary amine radical when X represents a carboxyl radical, or Y is a carboxyl radical when X represents a primary amine radical,
m is an integer ranging from 3 to 8,
the molar concentration of the monomers of formula (I) in the mixture of monomers being between 0.01% and 1%, the remainder to 100% corresponding to the monomers of general formulae (IIa) and (IIb).

Preferably the molar concentration of monomers of formula (III) is between 0.1 and 2%, the remainder to 100% being composed of the monomers of formula (IIa) or (IIb).

The monomer of general formula (I) comprises a radical $R_1$ which can advantageously be a trivalent radical of phenyl or cyclohexanyl type, which may or may not be substituted, tetravalent diaminopolymethylene radicals with a number of methylene groups advantageously of between 2 and 12, such as the radical originating from EDTA (ethylenediaminetetraacetic acid), octavalent cyclohexanonyl or cyclohexadinonyl radicals, for radicals originating from compounds resulting from the reaction of polyols, such as glycerol, sorbitol, mannitol or pentaerythritol, with acrylonitrile. The preferred radicals $R_1$ of the invention are cycloaliphatic radicals, such as the tetravalent cyclohexanonyl radical. The radical $R_1$ is preferably a cyclohexanoyl radical.

The radical A is preferably a methylene or polymethylene radical, such as the ethylene, propylene or butylene radicals.

The letter m preferably represents an integer greater than 3, advantageously equal to 4, 5 or 6.

According to another characteristic of the invention, the radical $R_3$ of general formula (III) represents polymethylene radicals which can comprise from 2 to 36 carbon atoms or cycloaliphatic or aromatic radicals.

Mention may be made, by way of example, as compound of formula (III), of succinic acid, adipic acid, terephthalic acid, isophthalic acid, sebacic acid, azelaic acid, dodecanoic acid or di(β-carboxyethyl)cyclohexanone. Mention may

also be made of diamine compounds, such as hexamethylenediamine, 5-methylpentamethylendiamine, meta-xylylenediamine, isophoronediamine or 1,4-diaminocyclohexane.

The monomers of formula (II) are advantageously lactams or amino acids, such as ε-caprolactam, lauryllactam and their ω-amino acid.

This polyamide is disclosed in WO2011/039183 A1.

The mixture of monomers preferably doesn't contain monomers of formula (IV) W-$R_4$ -W in which: W represents a primary amine radical when Z represents a carboxyl group, W represents a carboxyl radical when Z represents a primary amine radical, and $R_4$ has the same definition as $R_3$.

According to another preferred embodiment, the branched polyamide is a branched polyamide comprising recurring units derived from polycondensation of a mixture comprising:

- at least one trifunctional or tetrafunctional polyamine monomer comprising three or four amine functional groups selected from the group consisting of secondary amine group of formula -NH- and primary amine group of formula -$NH_2$ [monomer (FN)], and
- ε-caprolactam (or derivates thereof);

wherein:

when the monomer (FN) is a trifunctional polyamine monomer, said monomer (FN) is used in an amount such that the molar ratio monomer (FN)/ ε-caprolactam (or derivatives thereof) is of at least 0.002 and of at most 0.030, and when the monomer (FN) is a tetrafunctional polyamine monomer, said monomer (FN) is used in an amount such that the molar ratio monomer (FN)/ ε-caprolactam (or derivatives thereof) is of at least 0.001 and of at most 0.030; said branched polyamide possessing a concentration of amine end groups (AEG) and a concentration of carboxylic end groups (CEG) such that the difference AEG-CEG is of at least 100 meq/kg and of at most 300 meq/kg.

As examples of monomers (FN), mention can be made of tris(aminoalkyl)amines, such as tris(2-aminoethyl)amine (TREN); polyoxyalkylenetriamines, such as for example Jeffamine T® from Huntsman, including Jeffamine T403®(polyoxypropylenetriamine); polyalkylenepolyamines such as polyethyleneimine, which may advantageously have variable molecular weight, 1,8-diamino-4-aminomethyl-octane (TAN) and dialkylenetriamines, such as diethylenetriamine (DETA), bis(hexamethylene)triamine (BHT), and cyclohexane-1, 3, 5-triamine, and 2, 2,6,6- tetrakis (2-aminoethyl)cyclohexanone.

Preferred polyfunctional monomers are bis(hexamethylene)triamine (BHT), tris(2-aminoethyl)amine (TREN), 1,8-diamino-4-aminomethyl-octane (TAN) and combinations thereof.

ε-caprolactam is preferably used in the manufacture of the branched polyamide.

This polyamide is disclosed in WO 2021/063835 A1.

The polyamide of the invention preferably doesn't contain any hydroxyaromatic units chemically bonded to the chain of the polyamide.

The matrix material can be composed of a single polyamide or of a mixture of polyamides.

The matrix material of the invention preferably has a relative viscosity of at least 1.8 and of at most 2.25.

Preferably, the matrix material of the invention has a concentration of amine end groups (AEG) and a concentration of carboxylic end groups (CEG)° such that the absolute difference |AEG-CEG| is at least of 80 meq/kg, more preferably at least of 100 meq/kg.

Preferably, the amine end groups (AEG) and the carboxylic end groups (CEG)° are obtained without post-modification. Thus, in other words, the amine end groups (AEG) and the carboxylic end groups (CEG)° are preferably the amine end groups and the carboxylic end groups directly obtained after polycondensation such as for example the polycondensations described above.

## CONTINUOUS FIBERS

The fiber-reinforced composite of the invention contains continuous fibers. The continuous fibers mean a fiber bundle having a length exceeding 10 cm. The average fiber length of the continuous fiber bundle used in this invention is not specifically limited. It can be for instance of 10,000 m or 20,000 m. According to an embodiment of the invention, fiber roving which comprises a collection of individual filaments held together is used.

The fiber-reinforced composite of the invention can include fibers from a plurality of fiber bundles, each bundle including from 400 to 60,000 (1000 to 60,000) individual filaments. But the bundle can include until 100,000 individual filaments. Fibers in a bundle can have an average filament diameter of e.g., from 5 to 24 microns, 10 to 20 microns, or any range therebetween.

Non-limiting examples of continuous fibers include glass fibers, carbon fibers, aramid fibers, basalt fibers, steel

fibers, metal fibers, boron fibers, ceramic fibers or a combination thereof.

Glass fiber bundles (e.g., fiber glass yarn bundles) are commercially available from NEG (Nippon Electric Glass) under the trade name HYBON® or TUFRov®, Jushi Group Co., Ltd. (CHINA), and Kripa International (INDIA). Glass fiber bundles can have an average filament diameter of e.g., from 10 to 24 microns, 12 to 20 microns, or any range therebetween. Carbon fiber or modified carbon fiber bundles (e.g., carbon fiber tows) are commercially available from ACP Composites (Livermore, CA, USA), Toray Industries, Inc. (JAPAN), and ZOLTEK (Bridgeton, MO, USA) under the trade name Panex®. Carbon fiber bundles can have an average filament diameter of from 3 to 8 microns, from 6 to 7 microns, or any range therebetween.

Aramid fiber bundles (e.g., aramid fiber yarn bundles) are sold by DuPont™ (Wilmington, DE, USA) under the trade name KEVLAR®. Ceramic fiber bundles (e.g., metal oxide fiber bundles) are commercially available from 3M (United States) under the trade name 3M™ Nextel™ Continuous Ceramic Oxide Fibers. Basalt fiber bundles are commercially available from Kamenny Vek (Moscow, RUSSIA) under the trade name Basfiber® or from Sudaglass Fiber Technology under the trade name Sudaglass (RUSSIA).

Glass fibers or carbon fibers are preferred. Glass fibers with circular or non-circular cross sections can be used; hollow glass fibers can also be used.

The expression "hollow glass fibers" means "tube like" glass fibers with an outer diameter of 10 - 12 μm and inner diameter of 5 - 6 μm.

"Flat glass fibers" can also be used. In the present invention, the term "flat glass fibers" is intended to denote glass fibers having a non-circular cross section. Flat glass fibers suitable in the present invention may have any non-circular cross section such as an elliptical section, oblong-circular section, rectangle section, a section in which half rounds are connected to both short sides of a rectangle, and cocoon section.

The aspect ratio (= major axis/minor axis) of said non-circular cross section of the flat glass fibers is advantageously from 1.0 to 10, preferably from 1.5 to 6.0, more preferably from 2.0 to 5.0, most preferably from 3.0 to 4.0.

The aspect ratio according to the present invention can be determined by analyzing an image obtained by observing a cross section of the flat glass fiber with a scanning electron microscope (SEM), and circumscribing the non-circular section of the flat glass fiber with a rectangle. The aspect ratio is obtained by calculating A (= length of Ra)/B (= length of Rb) wherein A and B are the length of a long side Ra and a short side Rb of a rectangle circumscribed to the flat glass fiber in the observed image.

Furthermore, the flat glass fibers of the present invention preferably have a length of the main cross-sectional axis in a range of 6 to 40 μm, in particular of 17 to 30 μm, more preferably of 24 to 28 μm. The length of the subsidiary cross-sectional axis is preferably in the range of 3 to 20 μm, in particle in the range of 4 to 10 μm. It is even more preferred that the length of the main cross-sectional axis is 7 or 8 μm.

The nature of glasses constituting the glass fibers of the present invention is not particularly limited and can include E glass, T glass, NE glass, C glass, S glass, S2 glass and R glass, and the like. Glass fibers may contain sizing agents on their surface in order to guarantee their cohesion when in continuous strand forms, and particularly to provide adhesion at the interface with the polyamide matrix.

In preferred embodiments, circular cross- section glass fibers will be used.

The continuous fibers of the invention may be treated with a treatment agent. The treatment agent is exemplified by surface treating agent and sizing agent. The amount of consumption of the treatment agent is preferably 0.001 to 1.5% by mass of the continuous fiber, more preferably 0.1 to 1.2% by mass, and even more preferably 0.5 to 1.1% by mass.

The surface treating agent is exemplified by those composed of functional compound such as epoxy-based compound, acrylic compound, isocyanate-based compound, silane-based compound, and titanate-based compound, and is further exemplified by silane-based coupling agent and titanate-based coupling agent. The silane-based coupling agent is preferable.

The silane-based coupling agent is exemplified by trialkoxy- or triaryloxysilane compounds such as aminopropyltriethoxysilane, phenylaminopropyltrimethoxysilane, glycidylpropyltriethoxysilane, methacryloxypropyltrimethoxysilane, and vinyltriethoxysilane; ureidosilane; sulfidosilane; vinylsilane; and imidazolesilane.

The sizing agent is exemplified by epoxy-based resins such as bisphenol A-type epoxy resin; and vinyl ester resins including bisphenol A-type vinyl ester resins which are epoxy acrylate resins having an acryl group or methacryl group in one molecule of vinyl ester resin, novolac-type vinyl ester resin, and brominated vinyl ester resin. The sizing agent may also be a urethane-modified resins of epoxy-based resin or vinyl ester-based resin.

Only a single species of the treatment agent may be used independently, or two or more species thereof may be used in combination.

Method of treating the continuous fiber with the treatment agent may be any of known methods. An exemplary method is such as immersing the continuous fiber into a liquid (aqueous solution, for example) containing the treatment agent to thereby allow the treatment agent to adhere to the surface of the continuous fiber. The treatment agent may alternatively be air-blown onto the surface of the continuous fiber. It is alternatively possible to use a commercially available continuous fiber having been treated with the treatment agent, or to use such commercial product after once

removing the preliminarily applied treatment agent, and then re-treating it with a desired amount of treatment agent.

## ADDITIVES

A polymeric matrix of one of the present fiber-reinforced composites can be included in a composition along with one or more additives. Non-limiting examples of such additives include antioxidants, heat stabilizers, flame retardants, UV stabilizers, UV absorbers, impact modifiers, pigments and colorants, processing aids, toughening agents or a combination thereof.

A non-limiting exemplary stabilizer suitable for use as an additive component in the disclosed compositions can include, without limitation, Irganox® B225, Irganox® 1098, Irganox® B1171 commercially available from BASF. Non-limiting examples of flame retardants include halogen and non-halogen-based polymer modifications and additives, including melamine and melamine cyanurate derivatives, phosphinates and phosphonates and their salts, polyphosphates including melamine polyphosphate, which can be used in addition with synergistic systems such as $Sb_2O_3$ or Zn borate. Non-limiting examples of UV stabilizers include hindered amine light stabilizers, hydroxybenzophenones, hydroxyphenyl benzotriazoles, cyanoacrylates, oxanilides, hydroxyphenyl triazines, and combinations thereof. Non-limiting examples of UV absorbers include 4-substituted-2-hydroxybenzophenones and their derivatives, aryl salicylates, monoesters of diphenols, such as resorcinol monobenzoate, 2-(2-hydroxyaryl)-benzotriazoles and their derivatives, 2-(2-hydroxyaryl)-1,3,5-triazines and their derivatives, or combinations thereof. Non-limiting examples of impact modifiers include elastomers/softblocks dissolved in matrix-forming monomer(s). Non-limiting examples of pigments and colorants include TiO2, carbon black, ZnS, coloured pigments suitable for use in polyamide matrices. Non-limiting examples of processing aids include long chain fatty acids like stearic acid, their esters such as isobutylstearate, and metallic salts such as Li, Na, Ca, Zn, Al stearates, stearamides such as ethylenebis-stearamide, montanic waxes, paraffine oil, ethylene waxes and oxidized ethylene waxes, aliphatic ester waxes such as Bärolub LT107® from Bärlocher. Non-limiting examples of toughening agents include:

- polyolefins and copolyolefins (ethylene, propylene, octene, butene, butadiene etc.), copolymerized or grafted with:
  - carboxylic acids (e.g., acrylic acid, methacrylic acid, maleic, fumaric, itaconic acid, etc.).
  - anhydrides: e.g., maleic anhydride, itaconic anhydride.

For instance, EP(ethylene/propylene)-g(grafted)-MA(maleic anhydride) and EPDM(ethylene/propylene/diene)-g(grafted)-MA(maleic anhydride) rubbers, such as Exxelor® from Exxon - like Exxelor® VA1801 or Exxelor® VA1803- or Fusabond® from Dow like Fusabond® N493

- carboxylates: e.g. Na+, Li+, Ca++, Zn++, Al+++ salts of carboxylic acids. For instance, "ionomers" like Surlyn® ionomers from E.I DuPont de Nemours&Co
- esters: e.g., methyl, ethyl, butyl, glycidyl acrylates or methacrylates, optionally copolymerized with maleic anhydride (e.g., Lotader® from Arkema / SK® or Bynel® from Dow), and vinylesters (e.g., EVA copolymers under tradename Elvax® from Dow)

- styrene-butadiene copolymers, including SBR rubbers (styrene-butadiene), SB (styrene-butadiene) and SBS (styrene-butadienestyrene) rubbers, even in hydrogenated form (e.g. SEBS-styrene-ethylene/butene-styrene- rubbers), also copolymerized or grafted with carboxylic acids (e.g. acrylic acid, methacrylic acid, maleic, fumaric, itaconic acid, etc.) or anhydrides: e.g. maleic anhydride, itaconic anhydride (for instance Kraton G® from Kraton corporation, where maleic anhydride is grafted to SEBS block copolymers).

The heat stabilizer is preferably a copper-containing stabilizer. It can be a mixture of alkali metal or alkaline-earth metal halide and of a copper compound. The copper compound is preferably selected from the group consisting of copper (I) oxide, copper (II) oxide, copper (I) or copper (II) salt, for example cuprous or cupric acetate, cuprous or cupric stearate, a cuprous or cupric organic complex compound such as copper acetylacetonate, a cuprous or cupric halide or the like. According to certain preferred embodiments, the copper- containing stabilizer will consist essentially of a copper halide selected from copper iodide and copper bromide and the alkali metal halide will preferably be selected from the iodides and bromides of lithium, sodium and potassium.

A particularly preferred combination is the combination of CuI and KI. Another very advantageous combination is the mixture of $Cu_2O$ and KBr.

The amount of copper (Cu) in the copper-containing stabilizer will generally be sufficient to provide a level of from about 25 to about 1000 ppm, preferably of about 50 to about 500 ppm, more preferably of about 75 to about 200 ppm of Copper in the fiber-reinforced composite.

The amount of the halide containing (I or Br) stabilizers will generally be sufficient to provide a level of from about 100 to about 5000 ppm, preferably of about 300 to about 3000 ppm, more preferably of about 500 to about 2000 ppm of halide in the fiber-reinforced composite.

Preferably, the fiber-reinforced composite of the invention can comprise: from 10 to 70 wt%, preferably from 20 to 60 wt%, more preferably from 20 to 50 wt%, even more preferably from 20 to 40 wt% of matrix material.

Preferably, the fiber-reinforced composite of the invention can comprise from 30 to 90 wt%, preferably from 40 to 80 wt%, more preferably from 45 to 80 wt%, even more preferably from 50 to 80 wt% of continuous fibers.

In a preferred embodiment, the fiber-reinforced composite of the invention can comprise:

- from 10 to 70 wt% of matrix material, preferably from 20 to 60 wt%, more preferably from 20 to 50 wt%, even more preferably from 20 to 40 wt%, and
- from 30 to 90 wt% of continuous fibers, preferably from 40 to 80 wt%, more preferably from 45 to 80 wt%, even more preferably from 50 to 80 wt%.

The fiber-reinforced composite of the invention can comprise:

- from 10 to 70 wt% of matrix material, preferably from 20 to 60 wt%, more preferably from 20 to 50 wt%, even more preferably from 20 to 40 wt%,
- from 30 to 90 wt% of continuous fibers, preferably from 40 to 80 wt%, more preferably from 45 to 80 wt%, even more preferably from 50 to 80 wt%,
- 0 to 30 wt% of additive(s), preferably from 1 to 20 wt%.

The fiber- reinforced composite preferably doesn't contain any novolac resin.

Generally, the wt% of the matrix material, continuous fibers and additive(s) can be based on the amounts which were weighed in order to prepare the fiber-reinforced composite. They can also be determined by other methods. The continuous fibers wt% can for example be determined from the ash content measured according to the norm ISO 3451-4.

The matrix material of the invention (with the required relative viscosity and absolute difference |AEG-CEG|) allows to achieve a good impregnation of the continuous fibers by the matrix during the preparation of the fiber-reinforced composite.

A fiber-reinforced composite of the present disclosure may include a volume fraction of voids that is less than less than 3%, preferably less than 2%.

According to a first preferred embodiment of the invention, the fiber-reinforced thermoplastic composite is a single-ply tape.

The fiber-reinforced thermoplastic composite of the present invention can also be a solid profile with a rectangular or circular cross-section, such as a rod.

Fiber-reinforced thermoplastic composites of the present disclosure can be used in a variety of articles of manufacture.

In a preferred embodiment, the fiber-reinforced composite of the invention comprises:

- from 20 to 60 wt% of matrix material, preferably from 20 to 50 wt%, more preferably from 20 to 40 wt%;
- from 40 to 80 wt%, preferably from 45 to 80 wt%, more preferably from 50 to 80 wt% of continuous fibers selected from the group consisting of glass fibers, carbon fibers, aramid fibers, basalt fibers, steel fibers, metal fibers, boron fibers, ceramic fibers or a combination thereof;
- from 1 to 20 wt% of additive(s);

wherein the matrix material has:

- a concentration of amine end groups (AEG) and a concentration of carboxylic end groups (CEG)° such that the absolute difference |AEG-CEG| is at least of 100 meq/kg;
- a relative viscosity of at least 1.8 and of at most 2.25.

## METHOD OF PRODUCING THE FIBER REINFORCED THERMOPLASTIC COMPOSITE

The invention also concerns a method of producing the fiber-reinforced thermoplastic composite of the invention, particularly a single-ply tape, comprising the steps of:

- unwinding one or more fiber bundles, each having a plurality of fibers, from one or more spools
- preparing the one or more fiber bundles for spreading

- spreading or flattening the one or more fiber bundles into one spreaded layer
- impregnating the fiber layer with the matrix material by wetting the layer with the matrix material and incorporating the layer into the matrix material to form a fiber-reinforced composite
- forming the fiber-reinforced composite into a tape
- winding the tape around a spool

The process of the invention can implement spools of fiber bundles, an unwinding unit, a fiber preparation section, a spreading section, an impregnation section, a shaping unit, and a winder. Spools of fiber bundles can be positioned on the unwinding unit, which can unwind fiber bundles from the spools such that the fiber bundles can be provided to the fiber preparation section. Fiber preparation section can include units known in the art to prepare fiber bundles for spreading. For example, fiber preparation section may include one or more tensioners (e.g., a dancer tension control system, one or more rollers, and/or the like) for tensioning, stabilizing, and, in some instances, guiding fiber bundles. Such tensioner(s) may provide tension to fiber bundles during contact with spreading elements, which may help maintain the fiber bundles in position during spreading or flattening of the fiber bundles. In some instances, unwinding unit may be spaced from fiber preparation section and/or spreading section (e.g., by 1, 2, 3, 4, 5, 6, 7, 8, 9, 10, or more m), such that, for example, a weight of fiber bundles serves to tension the fiber bundles. For further example, fiber preparation section may be configured to heat fiber bundles and/or spray the fiber bundles (e.g., to remove any coating that may be present on the fiber bundles).

In spreading section, fiber bundles can be spread or flattened into a spreaded fiber layer. The spreaded fiber layer may be provided to impregnation section, where the fiber layer can be wetted with a matrix material and incorporated into a matrix material to form a fiber-reinforced thermoplastic composite. Impregnation section can include an extruder, a bath, a coating system, and/or the like. Fiber-reinforced thermoplastic composite can enter a shaping unit, where the fiber-reinforced thermoplastic composite may be formed into a tape or sheet. Tape may be provided to winder, which may wind the tape around a spool (e.g., to facilitate storage, transportation, and/or the like of the tape).

The process of the invention implements spreading units configured to spread one or more fiber bundles, each having a plurality of fibers, into one spreaded fiber layer. A fiber bundle can be spread in a direction that is perpendicular to a long dimension of the fiber bundle, thereby forming a spreaded or flattened fiber layer.

The terms "flattened" and "spreaded" are synonymous in the present application. As used in this disclosure, "flattened," "flattening," "spreaded," and "spreading" may each be used in connection with a process through which a fiber bundle is widened in a lateral direction, or a direction that is substantially perpendicular to a long dimension of the fiber bundle, such that, for example, the fiber bundle becomes thinner when viewed from the side.

More generally, a desired number of fiber bundles can be introduced into a UD tape production line. Fibers from the fiber bundles are continuously pulled through the production line by a pulling unit located at the end of the production line. The UD tape produced is wound around a spool.

The fiber-reinforced thermoplastic composite of the present disclosure can be produced at a rate of from 1 to 50 m/min, preferably 2 to 25 m/min, and more preferably 2 to 12 m/min, even more preferably 4 to 12 m/min.

The matrix material of the invention (with the required relative viscosity and absolute difference |AEG-CEG|) allows to produce a tape with a stable process, and with a good processability.

## ARTICLES

A fiber-reinforced thermoplastic composite can have a width from 1 mm to 1000 mm or from 2 mm to 1000 mm and up to 2000 mm for instance.

Also disclosed are laminates including fiber-reinforced thermoplastic composites of the present disclosure. Such laminates can include 2, 3, 4, 5, 6, 7, 8, 9, 10, or more plies, where one ply may consist of one fiber-reinforced thermoplastic composite of the present disclosure. In some laminates, at least two plies are positioned such that their respective fibers are substantially parallel to a first axis. In some laminates, at least two plies are positioned such that their respective fibers are not parallel to each other. Fiber-reinforced thermoplastic composites and laminates of the present disclosure can be assembled or processed into two-dimensional or three-dimensional structures, such as, for example, via winding and/or lay-up techniques.

Composites, plies, stacks, and laminates may be provided with protective coatings.

Also disclosed is an article of manufacture that includes any of the fiber-reinforced thermoplastic composites or laminates of the present disclosure. Non-limiting examples of such articles of manufacture include automotive parts (e.g., doors, hoods, bumpers, A-beams, B-beams, battery casings, bodies in white, reinforcements, cross beams, seat structures, suspension components, hoses, and/or the like), braided structures, woven structures, filament wound structures (e.g., pipes, pressure vessels, and/or the like), aircraft parts (e.g., wings, bodies, tails, stabilizers, and/or the like), wind turbine blades, boat hulls, boat decks, rail cars, sporting goods, window profiles, pilings, docks, reinforced wood beams, retrofitted concrete structures, reinforced extrusion or injection moldings, hard disk drive (HDD) or solid state

drive (SSD) casings, TV frames, smartphone mid-frames, smartphone unibody casings, tablet mid-frames, tablet unibody casings, TV stands or tables, lap-top computer casings, armor, plates, and/or the like.

The invention will now be further described by the following examples, which are, however, not to be understood in a limiting sense.

## Analyses

Relative viscosity (RV) was determined in $H_2SO_4$ 96% at 25°C, 1g of polyamide for 100 ml $H_2SO_4$, according to the norm DIN EN ISO 307:2019-11.

Carboxylic acid End-Groups (CEG) concentration and Amine End-Groups (AEG) concentration were determined by potentiometric titration in trifluoroethanol (TFE) solvent (unit: meq/kg).

Grayscale analysis

This analysis is applicable for a tape containing glass fibers and a natural-coloured polyamide 6 based matrix.

A color photograph of the tape (in the longitudinal direction of the tape) is taken with a scanner Epson Perfection V850 Pro. The image analyzing software "ImageJ" converts the photograph from the scanner to a picture based on 8-bit colour (8 bits per pixel). This allows 256 different intensities (i.e., shades of gray) to be recorded.

A grayscale image is one in which the value of each pixel is a single sample representing only an amount of light; that is, it carries only intensity information. Grayscale images, a kind of black-and-white or gray monochrome, are composed exclusively of shades of gray. The contrast ranges from black at the weakest intensity to white at the strongest.

The picture is then analyzed using the image analyzing software "ImageJ": the gray scale number of each pixel of the picture is determined (from 0 -black-to 255 -white-).

The average gray scale number is calculated: it corresponds to the average of the individual gray scale numbers of each pixel of the picture.

The higher this average, the higher the material translucent is, and the better the impregnation of the fibers with the matrix is.

Method of Measuring Void Ratio of fiber-reinforced composite with grayscale analysis

This method is applicable for a tape containing glass fibers and a natural-coloured polyamide 6 based matrix.

The voids correspond to individual gray scale numbers of the picture being from 0-30 according to the grayscale analysis described above.

The Void Ratio corresponds to the percentage of individual gray scale numbers being from 0-30 in the picture.

Method of Measuring Void Ratio of fiber-reinforced composite

The void ratio of the fiber-reinforced composite can be measured according to the method below. This analysis is applicable for instance for a tape containing carbon fibers.

A part of the fiber-reinforced composite was cut off, the obtained piece was embedded into an epoxy resin, polished so as to expose a cross-section in the thickness direction of the outer layer, and the cross-section was photographed using a ultradepth color 3D profile microscope VK-9500 (controller unit)/VK-9510 (measurement unit) (from Keyence Corporation). Void regions were selected from the obtained cross-sectional image using image analyzing software "ImageJ", and the area thereof was measured. Using the measured value, (area of void regions appeared in cross-section of fiber-reinforced composite /cross-sectional area of fiber-reinforced composite) $\times$ 100 was calculated. Every fiber-reinforced composite was measured at three points, and the measured values were averaged and then rounded off to the whole number to determine the void ratio (unit: %).

Tensile strength and tensile modulus of the laminates were determined according to the norm DIN EN ISO 527-5:2010-01 The specimen dimensions are as follows:

- For measuring the 0° direction: length 250 mm, width 15mm, thickness 1 mm

- For measuring the 90° direction: length 250 mm, width 25mm, thickness 2 mm

The specimens are dried 24h at 80°C before being tested.

For testing the tensile strength and tensile modulus of the tapes, the specimen dimensions are the same as described above, with the exception of the thickness which corresponds to the thickness of the tape. The specimens "kept in envelopes/recipients preventing moisture uptake" are conditioned for approximatively 72h at 50% relative humidity and 23°C before being tested.

Bending strength and bending modulus of the laminate were determined according to the norm DIN EN ISO

14125:2011-05.

The specimen dimensions are as follows: length 60 mm, width 15 mm, thickness 2 mm.

## Materials

### Matrix material

- **Domamid®H22** is a linear polyamide 6 from Domo Chemicals, having the following characteristics:

  RV: 2.2
  AEG (meq/kg): 40
  CEG (meq/kg): 70
  Absolute |AEG -CEG| (meq/kg): 30

- **Domamid®H24** is a linear polyamide 6 from Domo Chemicals, having the following characteristics:

  RV: 2.4
  AEG (meq/kg): 40
  CEG (meq/kg): 70
  Absolute |AEG -CEG| (meq/kg): 30

- **Domamid H1220 AEG 101** is a linear polyamide 6, having the following characteristics:

  RV: 2.2
  AEG (meq/kg): 130
  CEG (meq/kg): 25
  Absolute |AEG -CEG| (meq/kg): 105

- **Technylstar**

This branched polyamide is obtained according to the following process.

The polymerization is carried out in a heated autoclave comprising stirring means. Caprolactam and 2,2,6,6-tetra(P-carboxyethyl)cyclohexanone (known as T4), are added to the autoclave with distilled water and adipic acid (known as T2).

The cyclohexanone derivative (T4) and its process of synthesis are described in the paper "The Chemistry of Acrylonitrile II-Reactions with Ketones", JACS, 64, 2850 (1942), by Herman Alexander Bruson and Thomas W. Riener.

The stirred mixture (containing 96,618 wt% of caprolactam, 0,697 wt% of T4 and 0,393 wt% of T2) is heated to a temperature of 265°C, the pressure reaches 1.45 bar and the mixture is maintained at this temperature and pressure for 5,25 hours. Then the pressure is decreased until 0,5 bar within 1,5 hours.

The results and properties of the polyamides obtained are collated below:

RV: 2.157
AEG (meq/kg): 20
CEG (meq/kg): 160
Absolute |AEG -CEG| (meq/kg): 140

- **Staramine**

This branched polyamide was synthetized in a stainless-steel clave equipped with a mechanical stirrer, by polymerizing e-caprolactam in the presence of bis(hexamethylene)triamine, water (30%wt) with the following molar ratio: n(bis(hexamethylene)triamine)/n(e-caprolactam)=0.0042. The mixture was progressively heated up to 245°C, under 17.5 bar while allowing the distillation of water. The pressure was then progressively removed until atmospheric pressure. The pressure was then progressively set to 500 mbar, in 45 minutes and the temperature was kept at 245°C. Then the vacuum was broken and the polymer was extruded, cooled down in a water bath and pelletized. The removal of oligomers was done by washing several times in hot water, such that the residual content of caprolactam was below 0.3% in weight. Finally, the pellets were dried prior to analysis.

This branched polyamide had the following characteristics:

Mn = 12700 g/mol, and the IP = 1.7. The melting temperature Tm = 221°C.
This branched polyamide has the following characteristics:

RV: 2.08
AEG (meq/kg): 153
CEG (meq/kg): 35
Absolute |AEG -CEG| (meq/kg): 118

The number averaged molecular weight (Mn) and the dispersity (IP) are determined by one skilled in the art using the equation (I) and (II):

$$(I)\quad Mn = \left(1 + \frac{R}{1-R}\right) \cdot \frac{10^6}{[Co + CEG]}$$

$$(II)\quad IP = \left(1 + \frac{R}{1-R}\right) \cdot \left(2 - f(f-1)^2 \left(\frac{Co}{f.Co + CEG}\right)^2 + (f-1).(f-2).\frac{Co}{f.Co + CEG}\right)$$

with R, the molar ratio acid (DA)/monomer (FN); Co and CEG, respectively the concentration of monomer (FN) and carboxylic end groups in the polymer (B) in meq/kg; f the functionality of the monomer (FN).

## Continuous Fibers

**TUFRov® 4510 2400 tex** is a E-glass fibers roving from NEG
**TUFRov® 4510 1200 tex** is a E-glass fibers roving from NEG

These glass fiber rovings have a fiber diameter of 17 microns with a silane sizing compatible with nylon and have a tex of 1200 or 2400 g/km.

## Additives

PA6-based masterbatch KNF/2 containing:

- PA 6 as a matrix,
- CuI & KI >1 wt% in the masterbatch calcium stearate > 0,1 wt%
- KNF/2 is premixed with the polymer to achieve 2,5 wt% in the final compounded with the glass fibers.

## Process to produce a tape

A pultrusion line for UD Tapes is used.
The processing line contains a creel for the bobbins with the endless fibres. The creel is adjustable to set a defined tension on the fibres (600 cN for TUFRov® 4510 2400 tex, 300 cN for TUFRov® 4510 1200 tex).
The line has a spreading unit with spreading rods, that are heated at 150°C.
A pultrusion chamber having between 8 and 12 waves is used for the impregnation. This chamber has a width of 80 mm and a length of 500 mm and the matrix material (after having been dry-blended with the masterbatch additive) is entering the chamber (whose temperature is at 300°C)at four points. Feeding the chamber by matrix material (containing additive masterbatch) is done by a single screw extruder (extruder temperatures 250°C/270°C/280°C/300°C).
A water cooled calander is used for finishing the surface.
A pulling unit and a winding unit are pulling the material with a defined speed (at 6 m/min for all the comparative examples and invention examples, with the exception of example 4 for which the speed is at 10 m/min.
The edges of the tape are cut of at a cutting unit for finishing the material.
Table 1 gives the composition of the tapes (numbers correspond to wt%)

**Table 1**

| | Comp Ex.1 | Comp Ex.2 | Ex.1 | Ex.2 | Ex.3 | Ex.4 | Ex.5 | Ex.6 |
|---|---|---|---|---|---|---|---|---|
| TufRov® 4510 2400 tex | 56,7 | 66,5 | 65,1 | 65 | 66,1 | 66,6 | | 73,1 |
| TufRov® 4510 1200 tex | | | | | | | 62 | |
| Domamid®H24 | 40,8 | | | | | | | |
| Domamid®H22 | | 31 | | | | | | |
| Technylstar | | | 32,4 | | | 30,9 | 35,5 | 24,4 |
| Staramine | | | | | 31,4 | | | |
| Domamid H1220 AEG 101 | | | | 32,5 | | | | |
| Additive masterbatch (approximative content) | 2,5 | 2,5 | 2,5 | 2,5 | 2,5 | 2,5 | 2,5 | 2,5 |

Table 2 gives the results in terms of properties of the tapes and in terms of processability during the tape production

**Table 2**

| | Comp Ex. 1 | Comp Ex.2 | Ex.1 | Ex.2 | Ex.3 | Ex.4 | Ex.5 | Ex.6 |
|---|---|---|---|---|---|---|---|---|
| Tensile Modulus 0° (MPa) | Not measurable | 30491 | 31776 | 32163 | 32669 | 31912 | 30776 | 33902 |
| Tensile Strength 0° (MPa) | Not measurable | 662 | 840 | 756 | 731 | 821 | 806 | 897 |
| Average Gray Scale Value | Not measurable | 125 | 205 | 157 | 201 | 134 | 210 | 134 |
| Void content (%) according to grayscale analysis | | 2.1 | 0.77 | 0.54 | 0.77 | | | 0.93 |
| Processability | Not processable | Processabl e some inhomoge neities | Processabl e some inhomogen cities "less than Comp ex. 2" | Processabl e | Processable | Processable | Processable | Processable |

The processability was assessed when the material was processed by the pultrusion impregnation equipment as explained above. The material was deemed "processable" if the material could be processed in a continuous stable fashion with minimal to no inhomogeniety defects such as dry fibers/poor impregnation zones which lead to poor quality and possible machine shutdowns and if a finished product could be obtained at the end of the process. However, the material was deemed "not processable" if the material could not be processed in a continuous stable fashion due to too many inhomogeneities such as dry fibers/poor impregnation zones with multiple/frequent shutdowns.

The material in Comp Ex.1 was deemed "not processable "because it caused the pultrusion impregnation equipment to stop due to poor impregnation giving dry fibers which can block the equipment or cause fiber breakage. In such a condition a finished product could not be obtained.

The material in Comp Ex.2 was deemed "processable". However, many homogeneities were observed, such as dry fiber patches (areas that are not well impregnated). Moreover, the material was not processable at higher speed than 6 m/ min and not with with a fiber content of more than 66 wt.%.

Less inhomogeneities were observed for Ex. 1 than for Comp Ex.2. Moreover, for Ex. 1, Ex. 2, Ex. 3, and Ex. 5, the material was still processable at higher speed than 6 m/ min, see Ex 4, which was ran a 10m/min and with higher fiber contents, see Ex 6, which has 73.1% glass fiber.

As a conclusion, the processability of the materials obtained in Ex. 1, Ex. 2, Ex. 3, Ex. 4, Ex. 5 and Ex. 6 were much better than in Comp Ex. 2 and Comp Ex.1.

**Process to produce a laminate**

The preparation of samples for mechanical testing is done of a number of sheets corresponding to the specimen dimensions for the test.

Sheets are laminated under a continuous press (KFK-E laminating machine from Maschinenfabrik Herbert Meyer GmbH) at the following conditions:

Temperature of the press: 250°C
Speed: 1 m/min.

Table 3 gives the results in terms of properties of the laminates

**Table 3**

| | Comp Ex.2 | Ex.1 | Ex.3 | Ex.6 |
|---|---|---|---|---|
| Bending Modulus 0° (MPa) | 32625 | 34150 | 32400 | 38500 |
| Bending Strength 0° (MPa) | 950 | 1115 | 1000 | 1155 |
| Tensile Strength 0° (MPa) | 814 | 935 | 959 | 1070 |

## Claims

**1.** A fiber-reinforced thermoplastic composite comprising:

a matrix material including a thermoplastic material; and
a plurality of continuous fibers dispersed in the matrix material
wherein each of the plurality of continuous fibers is substantially aligned with the length of the fiber-reinforced composite
wherein the matrix material is a linear or branched polyamide having:

- a relative viscosity, measured in $H_2SO_4$ 96% at 25°C, 1g of polyamide for 100 ml $H_2SO_4$, according to the norm DIN EN ISO 307:201911, of at least 1.7 and of at most 2.3; and
- a concentration of amine end groups (AEG) and a concentration of carboxylic end groups (CEG)° such that the absolute difference |AEG-CEG| is at least of 100 meq/kg.

**2.** The fiber-reinforced thermoplastic composite according to claim 1, wherein the relative viscosity is of at least 1.8 and of at most 2.25.

**3.** The fiber-reinforced thermoplastic composite according to any one of the preceding claims, wherein it comprises:

- from 10 to 70 wt% of matrix material, preferably from 20 to 60 wt%, more preferably from 20 to 50 wt%, even more preferably from 20 to 40 wt%;
- from 30 to 90 wt% of continuous fibers, preferably from 40 to 80 wt%, more preferably from 45 to 80 wt%, even more preferably from 50 to 80 wt%;
- 0 to 30 wt% of additive(s), preferably from 1 to 20 wt%.

**4.** The fiber-reinforced thermoplastic composite according to any one of the preceding claims, wherein it is a single-ply tape.

**5.** The fiber-reinforced thermoplastic composite according to any one of claims 1 to 3, wherein it is a rod.

**6.** A method of producing the fiber-reinforced thermoplastic composite according to claim 4, comprising the steps of :

- unwinding one or more fiber bundles, each having a plurality of fibers, from one or more spools
- preparing the one or more fiber bundles for spreading
- spreading or flattening the one or more fiber bundles into one spreaded layer
- impregnating the fiber layer with the matrix material by wetting the layer with matrix and incorporating the layer into the matrix material to form a fiber-reinforced composite
- forming the fiber-reinforced composite into a tape
- winding the tape around a spool.

**7.** A fiber-reinforced thermoplastic composite obtained according to the method of claim 6.

**8.** A laminate comprising at least a single-ply tape according to claim 4.

**9.** An article comprising the fiber-reinforced thermoplastic composite of claim 1 to 5, or 7.

**Patentansprüche**

**1.** Ein faserverstärktes thermoplastisches Verbundmaterial, welches Folgendes umfasst:

ein Matrixmaterial, das ein thermoplastisches Material enthält; und
eine Vielzahl von im Matrixmaterial verteilten Endlosfasern,
wobei jede der Vielzahl von Endlosfasern im Wesentlichen mit der Länge des faserverstärkten Verbundmaterials ausgerichtet ist,
wobei das Matrixmaterial ein lineares oder verzweigtes Polyamid ist mit:

- einer relativen Viskosität, gemessen in 96%iger $H_2SO_4$ bei 25 °C, 1 g Polyamid für 100 ml $H_2SO_4$, gemäß Norm DIN EN ISO 307:2019 11, von mindestens 1,7 und höchstens 2,3; und
- einer Konzentration von Aminoendgruppen (AEG) und einer Konzentration von Carboxylendgruppen (CEG), sodass die absolute Differenz |AEG-CEG| mindestens 100 meq/kg beträgt.

**2.** Das faserverstärkte thermoplastische Verbundmaterial nach Anspruch 1, wobei die relative Viskosität mindestens 1,8 und höchstens 2,25 beträgt.

**3.** Das faserverstärkte thermoplastische Verbundmaterial nach irgendeinem der vorigen Ansprüche, wobei dieses Folgendes umfasst:

- 10 bis 70 Gew.-% Matrixmaterial, bevorzug 20 bis 60 Gew.-%, noch besser 20 bis 50 Gew.-%, noch besser sogar 20 bis 40 Gew.-%;
- 30 bis 90 Gew.-% Endlosfasern, bevorzugt 40 bis 80 Gew.-%, noch besser 45 bis 80 Gew.-%, noch besser sogar 50 bis 80 Gew.-%;
- 0 bis 30 Gew.-% Zusatzstoff(e), bevorzugt 1 bis 20 Gew.-%.

**4.** Das faserverstärkte thermoplastische Verbundmaterial nach irgendeinem der vorigen Ansprüche, wobei dieses ein einlagiges Band ist.

5. Das faserverstärkte thermoplastische Verbundmaterial nach irgendeinem der Ansprüche 1 bis 3, wobei dieses ein Stab ist.

6. Ein Verfahren zur Herstellung des faserverstärkten thermoplastischen Verbundmaterials nach Anspruch 4, welches die folgenden Schritte umfasst:

   - Abwickeln eines oder mehrerer Faserbündel, die jeweils eine Vielzahl von Fasern haben, von einer oder mehreren Spulen
   - Vorbereiten des einen oder der mehreren Faserbündel zum Ausbreiten
   - Ausbreiten oder Glätten des einen oder der mehreren Faserbündel in eine ausgebreitete Schicht
   - Imprägnieren der Faserschicht mit dem Matrixmaterial, indem die Schicht mit Matrix befeuchtet wird und die Schicht in das Matrixmaterial aufgenommen wird, um ein faserverstärktes Verbundmaterial zu formen
   - Formen des faserverstärkten Verbundmaterials in ein Band
   - Aufwickeln des Bandes auf eine Spule.

7. Ein faserverstärktes thermoplastisches Verbundmaterial erhalten nach dem Verfahren nach Anspruch 6.

8. Ein Laminat, welches zumindest ein einlagiges Band nach Anspruch 4 umfasst.

9. Ein Artikel, welcher das faserverstärkte thermoplastische Verbundmaterial nach Anspruch 1 bis 5, oder 7 umfasst.

**Revendications**

1. Composite thermoplastique renforcé par des fibres comprenant :

   un matériau de matrice incluant un matériau thermoplastique ; et
   une pluralité de fibres continues dispersées dans le matériau de matrice
   dans lequel chacune de la pluralité de fibres continues est sensiblement alignée sur la longueur du composite renforcé par des fibres
   dans lequel le matériau de matrice est un polyamide linéaire ou ramifié ayant :

   - une viscosité relative, mesurée dans du $H_2SO_4$ à 96% à 25°C, 1g de polyamide pour 100 ml de $H_2SO_4$, selon la norme DIN EN ISO 307:2019-11, d'au moins 1,7 et d'au plus 2,3 ; et
   - une concentration de groupes terminaux amine (AEG) et une concentration de groupes terminaux carboxyliques (CEG)° telle que la différence absolue |AEG-CEG| soit au moins de 100 meq/kg.

2. Composite thermoplastique renforcé par des fibres selon la revendication 1, dans lequel la viscosité relative est d'au moins 1,8 et d'au plus 2,25.

3. Composite thermoplastique renforcé par des fibres selon l'une quelconque des revendications précédentes, dans lequel il comprend :

   - de 10 à 70 % en poids de matériau de matrice, de préférence de 20 à 60 % en poids, plus préférentiellement de 20 à 50 % en poids, encore plus préférentiellement de 20 à 40 % en poids ;
   - de 30 à 90 % en poids de fibres continues, de préférence de 40 à 80 % en poids, de préférence de 45 à 80 % en poids, de préférence encore de 50 à 80 % en poids ;
   - 0 à 30 % en poids d'additif(s), de préférence de 1 à 20 % en poids.

4. Composite thermoplastique renforcé par des fibres selon l'une quelconque des revendications précédentes, dans lequel il s'agit d'une bandemonocouche.

5. Composite thermoplastique renforcé par des fibres selon l'une quelconque des revendications 1 à 3, dans lequel il s'agit d'une tige.

6. Procédé de fabrication du composite thermoplastique renforcé par des fibres selon la revendication 4, comprenant les étapes consistant à :

- dérouler un ou plusieurs faisceaux de fibres, chacun ayant une pluralité de fibres, à partir d'une ou plusieurs bobines
- préparer le ou les faisceaux de fibres pour l'étalement
- étaler ou aplatir le ou les faisceaux de fibres en une couche étalée
- imprégner la couche de fibres avec le matériau de matrice en mouillant la couche avec la matrice et en incorporant la couche dans le matériau de matrice pour former un composite renforcé par des fibres
- former le composite renforcé par des fibres en une bande
- enrouler la bande autour d'une bobine.

**7.** Composite thermoplastique renforcé par des fibres obtenu selon le procédé de la revendication 6.

**8.** Stratifié comprenant au moins une bande monocouche selon la revendication 4.

**9.** Article comprenant le composite thermoplastique renforcé par des fibres des revendications 1 à 5 ou 7.

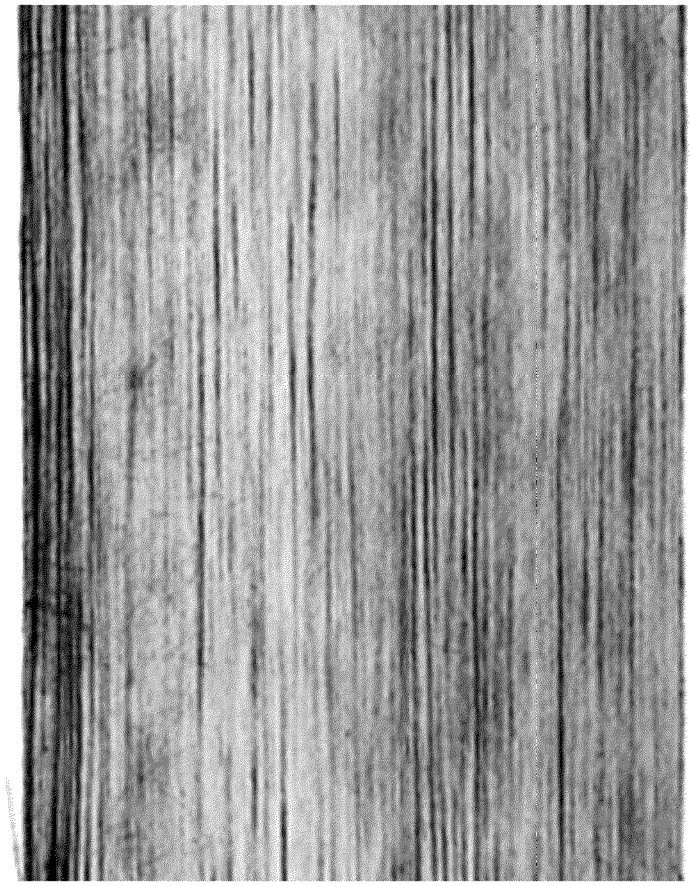

FIG. 1

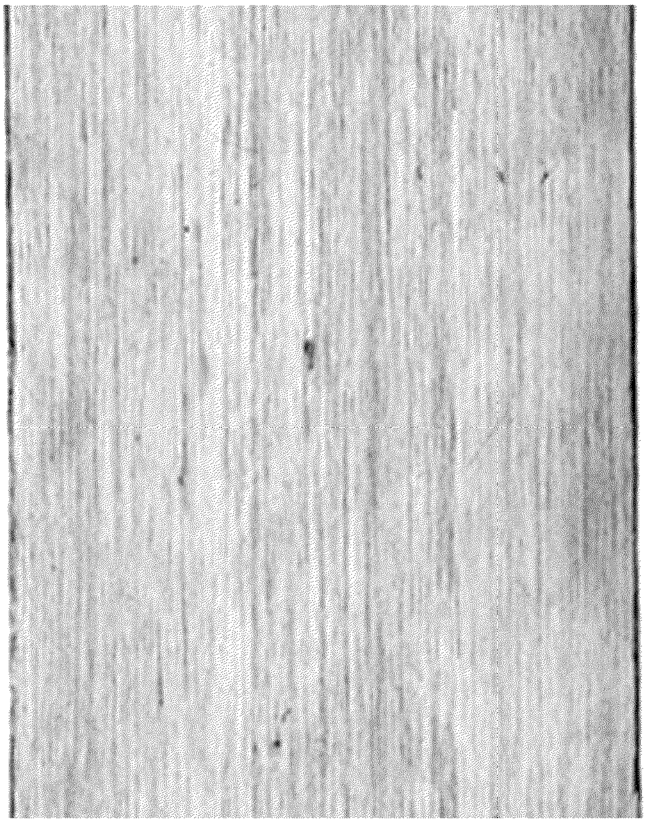

FIG. 2

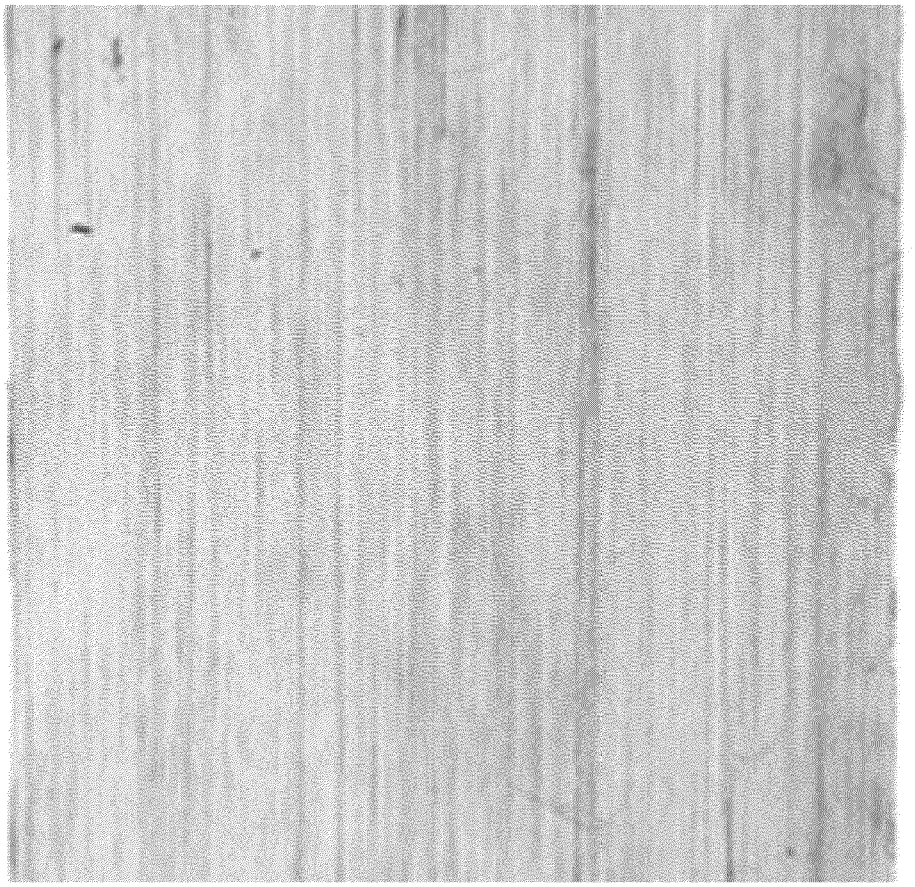

FIG. 3

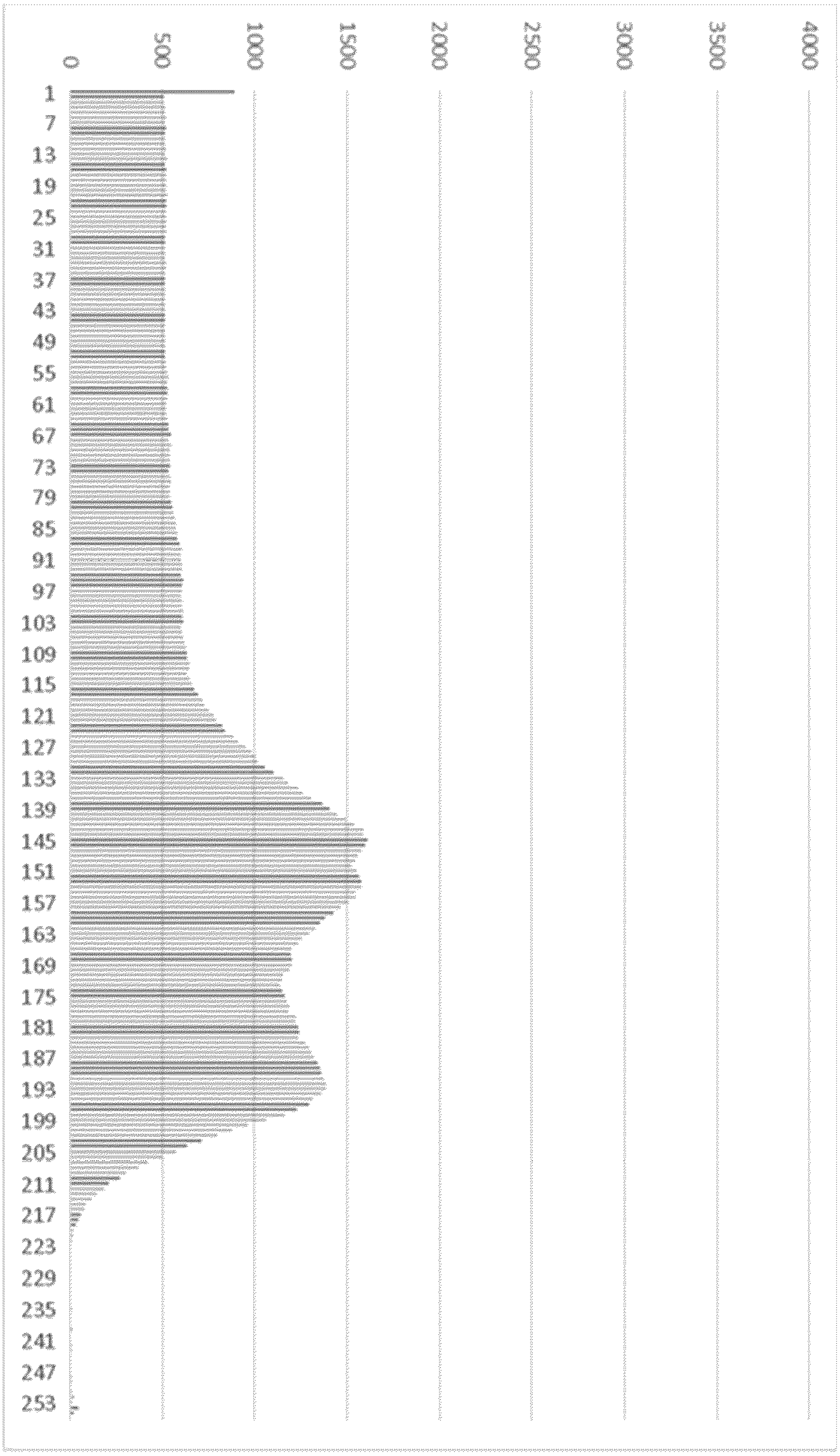
0
500
1000
1500
2000
2500
3000
3500
4000
1
7
13
19
25
31
37
43
49
55
61
67
73
79
85
91
97
103
109
115
121
127
133
139
145
151
157
163
169
175
181
187
193
199
205
211
217
223
229
235
241
247
253

FIG. 4

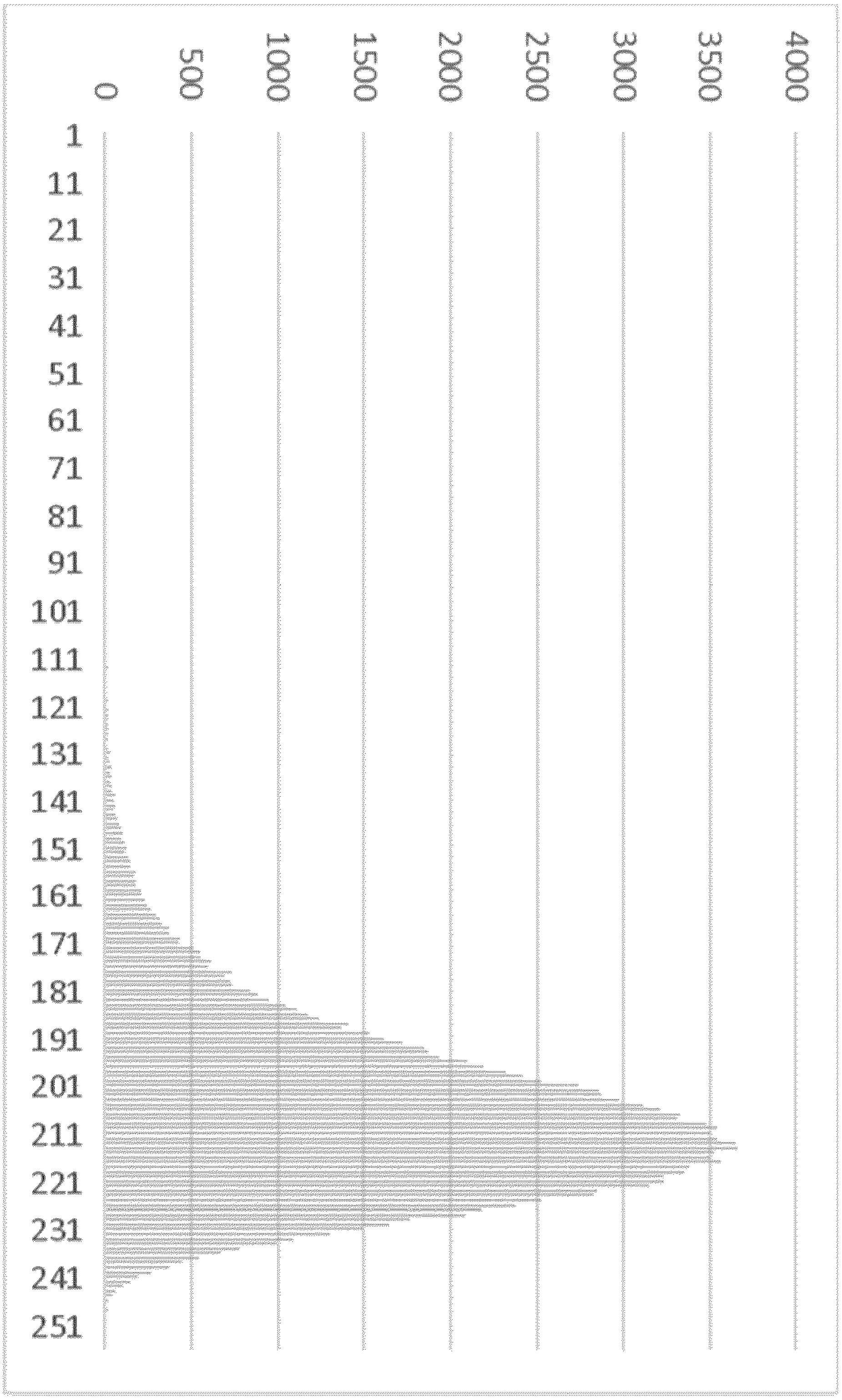
0
500
1000
1500
2000
2500
3000
3500
4000
1
11
21
31
41
51
61
71
81
91
101
111
121
131
141
151
161
171
181
191
201
211
221
231
241
251

FIG. 5

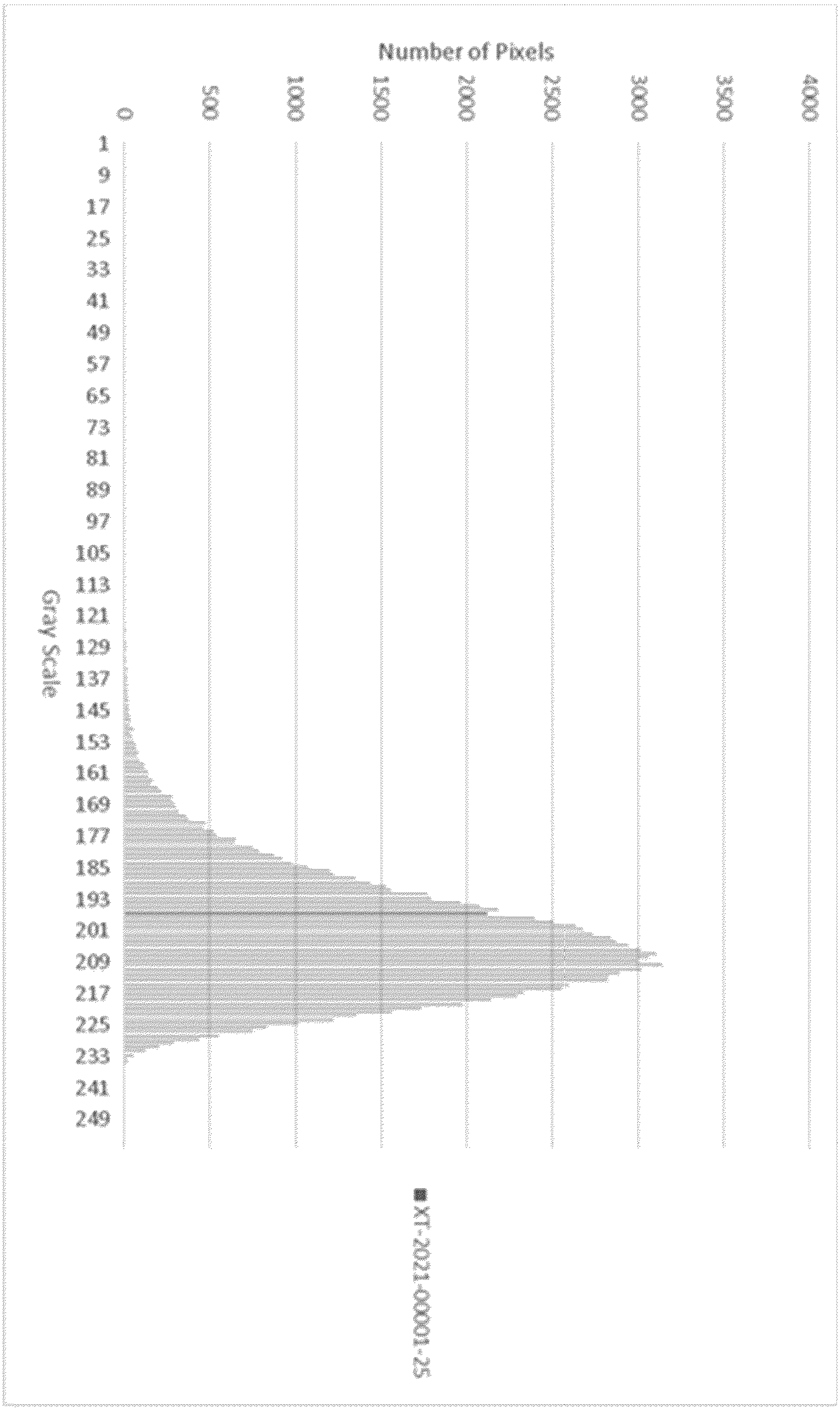
Number of Pixels
0
500
1000
1500
2000
2500
3000
3500
4000
Gray Scale
1
9
17
25
33
41
49
57
65
73
81
89
97
105
113
121
129
137
145
153
161
169
177
185
193
201
209
217
225
233
241
249
XT-2021-00001-25

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011039183 A1
- WO 2021063835 A1